Europäisches Patentamt

European Patent Office

Office européen des brevets

(19)

(11) Veröffentlichungsnummer : **0 362 625 B1**

## (12) EUROPÄISCHE PATENTSCHRIFT

(45) Veröffentlichungstag der Patentschrift :
**04.11.92 Patentblatt 92/45**

(51) Int. Cl.$^5$ : **G01B 11/00**

(21) Anmeldenummer : **89117453.4**

(22) Anmeldetag : **21.09.89**

(54) **Koordinatenmessgerät mit einem optischen Tastkopf.**

(30) Priorität : **07.10.88 DE 3834117**

(43) Veröffentlichungstag der Anmeldung :
**11.04.90 Patentblatt 90/15**

(45) Bekanntmachung des Hinweises auf die
Patenterteilung :
**04.11.92 Patentblatt 92/45**

(84) Benannte Vertragsstaaten :
**CH DE FR GB IT LI NL SE**

(56) Entgegenhaltungen :
**EP-A- 0 070 141**
**US-A- 4 561 776**
**WERKSTATT UND BETRIEB, Band 121, Nr. 4,**
**April 1988, Seite 330, München, DE:**
**"Modulare Tastkopffamilie"**

(73) Patentinhaber : **Firma Carl Zeiss**
**W-7920 Heidenheim (Brenz) (DE)**
(84) **CH DE FR IT LI NL SE**
Patentinhaber : **CARL ZEISS-STIFTUNG**
**HANDELND ALS CARL ZEISS**
**W-7920 Heidenheim (Brenz) (DE)**
(84) **GB**

(72) Erfinder : **Hof, Albrecht, Dr.**
**Kiefernweg 3**
**W-7080 Aalen (DE)**
Erfinder : **Ulrich, Wilhelm**
**Mozartstrasse 24**
**W-7080 Aalen (DE)**
Erfinder : **Koch, Klaus-Peter, Dr.**
**Himmlinger Weg 50**
**W-7080 Aalen (DE)**
Erfinder : **Rübl, Lothar**
**Fuchsweg 21/2**
**W-7080 Aalen (DE)**

**Beschreibung**

Die Erfindung betrifft ein Koordinatenmeßgerät mit einem am Meßarm des Koordinatenmeßgerätes befestigten optischen Tastkopf.

Es ist bereits bekannt, an Koordinatenmeßgeräten anstelle des oder zusätzlich zu dem üblicherweise verwendeten mechanischen Tastkopf, mit dem das zu vermessende Werkstück berührt werden muß, sogenannte optische Tastköpfe zu verwenden, die eine berührungslose Erfassung der zu vermessenden Geometrieelemente gestatten. Hierfür sind sowohl punktweise messende optische Tastköpfe eingesetzt, die in der Regel nach dem sogenannten Triangulationsprinzip arbeiten, als auch sogenannte "Videotaster", von denen ein mehr oder minder komplettes Bild des zu vermessenden Geometrieelementes aufgenommen und anschließend mit den an sich bekannten Mitteln der Bildanalyse ausgewertet wird.

Bei Videotastsystemen des letztgenannten Typs bereitet die Beleuchtung des zu vermessenden Objektdetails besondere Probleme. Denn für eine kontrastreiche und reflexfreie Beleuchtung insbesondere von glatten bzw. metallischen Werkstückoberflächen muß der Winkel, unter dem die Beleuchtungseinrichtung strahlt, an die Brennweite des verwendeten Objektivs angepaßt werden. Dies ist oft nur mit großem Aufwand möglich. Außerdem entsteht bei den meisten der verwendeten Lichtquellen Verlustwärme, die zu einer unerwünschten Verformung des Maschinenkoordinatensystems führen kann.

Es ist bereits vorgeschlagen worden, faseroptische Ringleuchten in Verbindung mit Videotastern an Koordinatenmeßgeräten einzusetzen, um das vorstehend angesprochene Problem zu umgehen. Beispielsweise ist in dem US-Patent 47 06 168 ein Koordinatenmeßgerät mit einem derartigen Videotaster beschrieben. Hier erfolgt jedoch die Versorgung der Ringleuchte über flexible Lichtleiter von einer ortsfest aufgestellten Lichtquelle aus. Zur Anpassung des Beleuchtungswinkels an die Brennweite des verwendeten Objektivs ist eine komplizierte Einstellmechanik nötig. Eine Einstellung des Videotasters in unterschiedliche Blickrichtungen ist nicht möglich.

In der US-PS 45 61 776 sind auswechselbare optische Tastköpfe beschrieben, die zum Teil durch Lichtleiter von außerhalb des Tastkopfes angeordnete Lichtquellen versorgt werden. Dort ist jedoch weder die Problematik von an unterschiedliche Objektive anzupassende Beleuchtungsoptiken angesprochen als auch keine Angaben darüber gemacht, wie das Licht verlustarm an der Wechselstelle ein- bzw. ausgekoppelt wird.

Es ist auch schon vorgeschlagen worden, optische Tastköpfe wie z.B. Triangulationstaster oder Videotaster über ein sogenanntes Dreh-Schwenk-Gelenk am Meßarm eines Koordinatenmeßgerätes zu befestigen, um unterschiedliche Blickrichtungen realisieren zu können. Ein solches Tastsystem ist beispielsweise in der US-PS 4 688 184 beschrieben. Dies bekannte Tastsystem ist jedoch sehr teuer. Denn ein Dreh-Schwenk-Gelenk, das einen Videotaster mit seiner relativ hohen Masse hochgenau zu positionieren in der Lage ist, erfordert einen hohen konstruktiven und fertigungstechnischen Aufwand.

In der EP-A1- 0 070 141 ist ein optischer Taster für das punktweise Antasten von Objekten beschrieben, der nach dem sogenannten "Defokussierungsprinzip" arbeitet. Aus dieser Schrift ist es auch bekannt, mehrere Einzeltaster unter einem Winkel zueinander anzuordnen, so daß deren Fokii einen Ring von Antastpunkten bilden. Hierbei handelt es sich jedoch um keinen Videotaster, und eine Optik zur Abbildung eines größeren Oberflächenbereiches auf einen Bildsensor besitzt dieser bekannte Taster ebenfalls nicht.

In der internationalen Patentanmeldung WO 87/01798 ist eine Tasterwechseleinrichtung beschrieben, die den Austausch von mechanischen Tastköpfen gegen optische Tastköpfe ermöglichen soll. Dieser Schrift sind jedoch keine Angaben bezüglich der Ausgestaltung einer Beleuchtungseinrichtung für optische Taster entnehmbar.

Es ist die Aufgabe der vorliegenden Erfindung ein Koordinatenmeßgerät mit einem am Meßarm befestigten optischen Tastkopf zu schaffen, welches einfach und schnell an unterschiedliche Meßaufgaben angepaßt werden kann, die beispielsweise unterschiedliche Arbeitsabstände, Durchmesser oder Blickrichtungen des Tastsystems erfordern, und bei dem die Beleuchtungseinrichtung der Meßaufgabe stets optimal angepaßt ist.

Diese Aufgabe wird durch die im Anspruch 1 angegebenen Maßnahmen gelöst, ist.

Durch diese Maßnahmen ist es möglich, die Frontoptiken von optische Tastköpfen ebenso wie die Taststifte von mechanischen Tastköpfen ohne Nachkalibrierung einfach und schnell automatisch auszuwechseln, wobei die Beleuchtung gleich mitgewechselt wird und dementsprechend immer dem benutzen Objektiv angepaßt ist. Trotz Verwendung von Lichtleitern zur Beleuchtung ist der Wechselvorgang automatisierbar, da die Lichtleiter mit über die Trennfläche zwischen der Frontoptik und dem verbleibenden Teil des Tastkopfes geführt sind.

Die Beleuchtungseinrichtung des Tastkopfes kann deshalb von einer zweckmäßig thermisch isoliert am anderen Ende des Meßarmes befestigten Lichtquelle gespeist werden, ohne daß die Lichtleiterkabel im Meßbereich des Koodinatenmeßgerätes stören.

Es ist vorteilhaft, mehrere Frontoptiken vorzusehen, die Objektive mit unterschiedlichem Arbeitsabstand, unterschiedlichem Durchmesser oder unterschiedlicher Blickrichtung besitzen, um eine Vielzahl verschiedener Meßaufgaben angehen zu können.

Unterschiedliche Blickrichtungen lassen sich zweckmäßig auch dadurch erzielen, daß für die Frontoptik eine kontinuierlich oder in festen Schritten drehbare Halterung vorgesehen ist.

Weiterhin ist es zweckmäßig, wenn der Tastkopf über eine nachgiebige Knickstelle im Meßarm des Koordinatenmeßgerätes gelagert ist. Die Knickstelle dient als Kollisionsschutz und verhindert ein Zerstören des Tastkopfes infolge Kollision mit z.B. dem zu vermessenden Werkstück.

Die Beleuchtungsoptik des Tastkopfes kann außerdem mehrere um das Objektiv des Tastkopfes herum angeordnete Kollimatoren enthalten, die unter dem für eine Dunkelfeldbeleuchtung erforderlichen Winkel zur optischen Achse des Objektivs strahlen. Auf diese Weise lassen sich Stufen an Metalloberflächen sehr gut erkennen. Von besonderem Vorteil kann es hier sein, wenn jeder der Kollimatoren von einem eigenen Lichtleiter versorgt ist und die Lichtleiter einzeln schaltbar sind. Denn damit läßt sich für die Beleuchtung eine Vorzugsrichtung einstellen, unter der bestimmte Oberflächenstrukturen deutlicher sichtbar sind bzw. mit höherem Kontrast abgebildet werden.

Um Lichtverluste an der Trennstelle der Lichtleiter in der Nähe der Wechselfläche für die Frontoptik möglichst gering zu halten ist es zweckmäßig, wenn die Enden der Lichtleiter dort in Zentrierhülsen aufgenommen sind. Dem gleichen Zweck dient auch die Maßnahme, für die in der Frontoptik selbst enthaltenen Lichtleiter Lichtleitstäbe mit vollem Querschnitt zu verwenden. Auf diese Weise sind Zwickelverluste vermieden, die andernfalls entstehen, wenn zwei aus mehreren Einzelfasern bestehende Lichtleiter stirnseitig aufeinandergesetzt werden.

Weitere Einzelheiten der Erfindung ergeben sich aus der nachfolgenden Bescheibung von Ausführungsbeispielen anhand der Figuren 1-9 der beigefügten Zeichnungen

Figur 1 zeigt ein erstes Ausführungsbeispiel für einen optischen Tastkopf im Schnitt am Meßarm eines Koordinatenmeßgerätes;

Figur 2 ist ein Schnitt durch den Halter (2) in Figur 1 in einer anderen Ebene;

Figur 3 zeigt die Frontoptik (10) aus Figur 1 im Schnitt entlang der Linie III-III in Figur 1;

Figur 4 zeigt den Tastkopf aus Figur 1 mit einer Frontoptik mit abgewinkelter Blickrichtung;

Figur 5a ist eine vergrößerte Schnittdarstellung eines der Lichtleiter im Tastkopf nach Figur 1 im Bereich der Wechselfläche;

Figur 5b und 5c sind Schnitte durch die Lichtleiter (9a) bzw. (13a) aus Figur 5a;

Figur 6 zeigt in Ansicht ein weiteres Ausführungsbeispiel für einen optischen Tastkopf gemäß der Erfindung am Meßarm eines Koordinatenmeßgerätes;

Figur 7 ist die Ansicht einer alternativen Ausführungsform eines Teils der Frontoptik aus Figur 6;

Figur 8 ist die Aufsicht auf die Wechselfläche eines Tastkopfes gemäß einem weiteren Ausführungsbeispiel der Erfindung;

Figur 9 ist eine vereinfachte Prinzipskizze eines Koordinatenmeßgerätes mit dem in Figur 1 dargestellten Tastkopf.

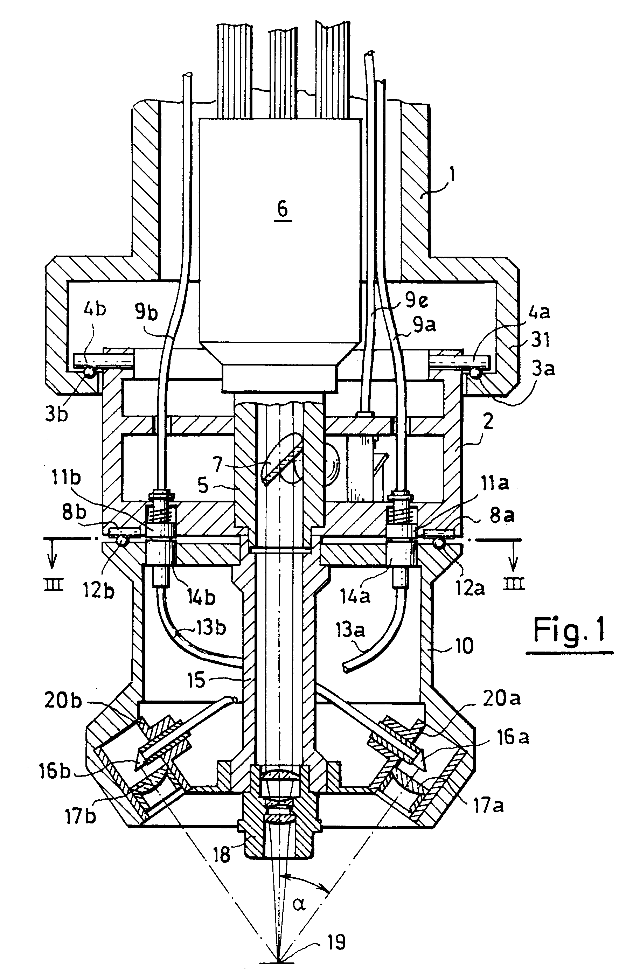

In Figur 1 stellt das mit (1) bezeichnete Teil das untere Ende der vertikalen Pinole eines Koordinatenmeßgerätes dar. Der rechteckige Querschnitt der Pinole (1) mündet dort in einen ringförmigen Bund (31) mit größerem Durchmesser, der innen in Winkelabständen von 120° drei Kugelpaare trägt, auf denen ein Zwischenstück (2) mit drei radial abstehenden Zylindern (4a-c) aufliegt. In der Darstellung nach Figur 1 sind nur die beiden Kugeln (3a) und (3b) der Kugelpaare zu sehen. Das durch die drei Zylinder (4a-c) und die drei Kugelpaare gebildete Dreipunktlager dient als Kollisionsschutz.

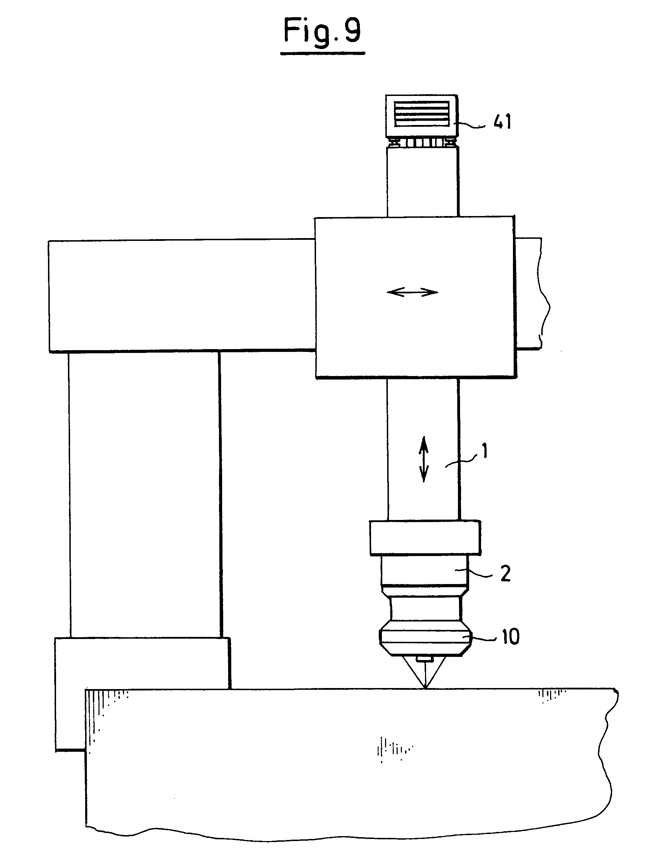

Zentrisch im Zwischenstück (2) ist ein Tubusrohr (5) befestigt, auf das eine Videokamera (6) aufgesetzt ist. Diese Videokamera (6) ist der Sensor des aus den Gehäuseteilen (2) und (10) bestehenden optischen Tastkopfes, die Anschlußkabel der Kamera (6) sind durch das Innere der hohlen Pinole (1) geführt. Gleichfalls durch die Pinole geführt sind fünf Lichtleiter (9a-e), von denen in der Darstellung nach Figur 1 drei Stück nämlich die Lichtleiter (9a,9b und 9e) zu sehen sind. Die Lichtleiter bestehen aus flexiblen Faserkabeln und werden wie in Figur 9 dargestellt von einer am oberen Ende der Pinole (1) thermisch isoliert montierten Lichtquelle (41) versorgt.

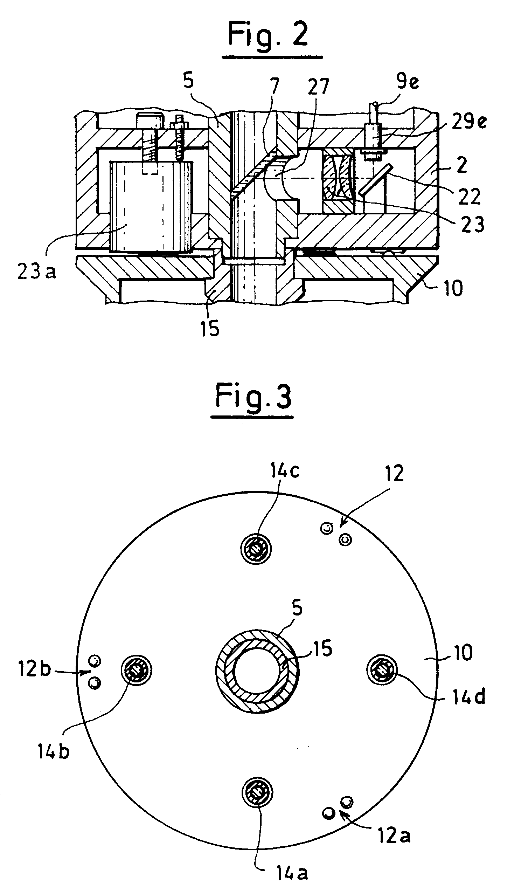

Der Lichtleiter (9e) endet wie aus der Darstellung nach Figur 2 ersichtlich ist, im Zwischenstück (2) in einer Befestigungshülse (29e). Das aus ihm austretende Licht wird nach Umlenkung an einem Spiegel (22) über einen Kollektor (23) geführt und von einem Teilerspiegel (7) im Tubusrohr (5) in den Beobachtungsstrahlengang eingespiegelt und dient zur Hellfeldbeleuchtung der zu vermessenden Objekte.

Die vier anderen Lichtleiter (11a-11d) enden in axial federnden Zentrierhülsen (11a-d) an der Unterseite des Zwischenstücks (2). Die Unterseite des Zwischenstücks (2) stellt außerdem die Wechselfläche für die daran auswechselbar gehaltenen nachfolgend beschriebenen Frontoptiken dar.

Die in der Darstellung nach Fig. 1 an das Zwischenstück (2) angesetzte Frontoptik trägt an der Oberseite ihres Gehäuses (10) drei Kugelpaare (12a-c), die eine eindeutig bestimmte Lagerung des Gehäuses (10) auf den in die Unterseite des Zwischenstücks (2) eingelassenen drei Zylindern (8a,8b und 8c) bewirken. Im Inneren des Gehäuses (10) ist in Verlängerung des Tubusrohres (5) im Zwischenstück (2) ein zweites Tubusrohr (15) gefaßt, das an seiner Unterseite das Objektiv (18) der Frontoptik trägt. Um dieses Objektiv (18) herum sind in Winkelabständen von 90° vier Fassungen (20a-d) für vier Kollimatorlinsen (17a-d) eingelassen. Die Kollimatoren sind so ausgerichtet, daß ihre Achsen die optische Achse des Objektivs (18) in der Objektebene (19) unter einem für Dunkelfeldbeleuchtung ausgewählten Winkel α schneiden.

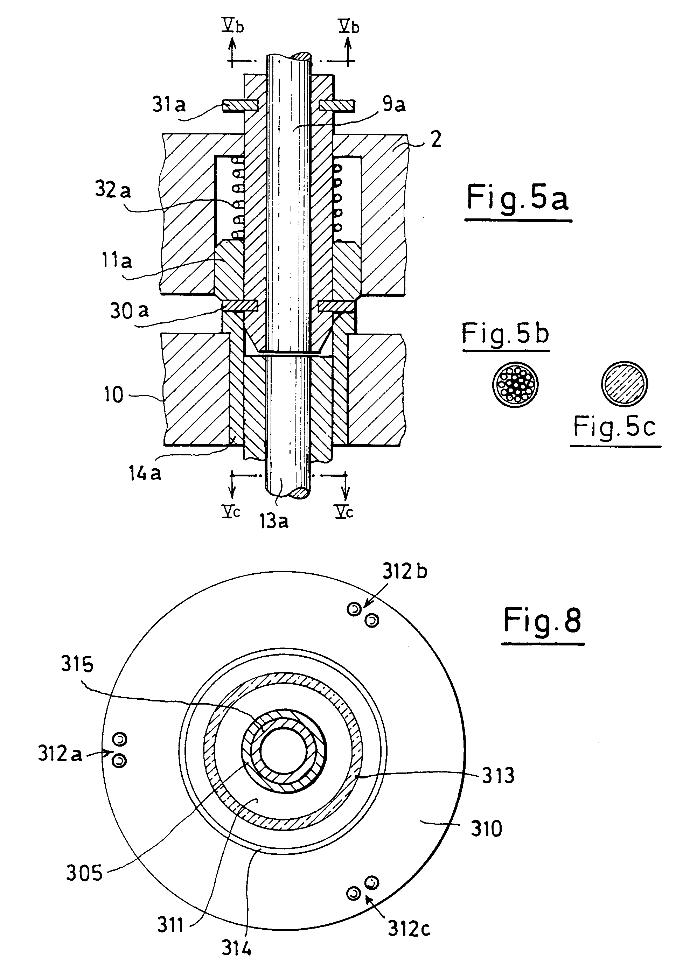

Die Kollimatoren (17a-d) beleuchten das zu vermessende Objekt mit dem Licht, das aus den Endflächen von vier Lichtleitern (13a-13d) austritt. Zur Strahlumlenkung sind auf die Lichtleiterendflächen jeweils Prismen (16a-16d) aufgesetzt. Die Lichtleiter (13a-d) sind halbstarre Plastikstäbe, deren andere Enden jeweils in Fassungen (14a-d) an der Oberseite des Gehäuses (10) münden. Wie aus der vergrößerten Darstellung nach Figur 5a hervorgeht sind diese Fassungen (14) innen leicht abgeschrägt, so daß die konischen Außenflächen der Zentrierhülsen (11), in die die flexiblen Lichtleiter (9a-d) versorgungsseitig münden, dort bei jedem Wechselvorgang sicher aufgenommen werden. Eine Feder (32a) sorgt in Verbindung mit zwei Anschlagringen (31a) und (30a) in der in Figur 5 dargestellten Lichtleiterkupplung für ein sicheres Ankoppeln bei jedem Wechselvorgang.

Der Kern des halbstarren Lichtleitstabes (13a) im Gehäuse (10) besteht aus Vollmaterial, wie dies im Schnitt nach Figur 5c ersichtlich ist. Hierdurch wird erreicht, daß die aus dem versorgungsseitig aus Einzelfasern bestehenden flexiblen Lichtleiter (9) (siehe Figur 5b) austretende Strahlung verlustfrei in den Lichtleiter (13a) eintritt. Zwickelverluste entstehen daher nicht.

Die Haltekraft, von der das Gehäuse (10) der wechselbaren Frontoptik in das Dreipunktlager (12/8) an der Unterseite des Zwischenstücks (2) gezogen wird, wird von drei Elektromagneten im Zwischenstück (2) aufgebracht. In der Darstellung nach Figur 2 ist einer der Magneten, der Magnet (23a) zu sehen.

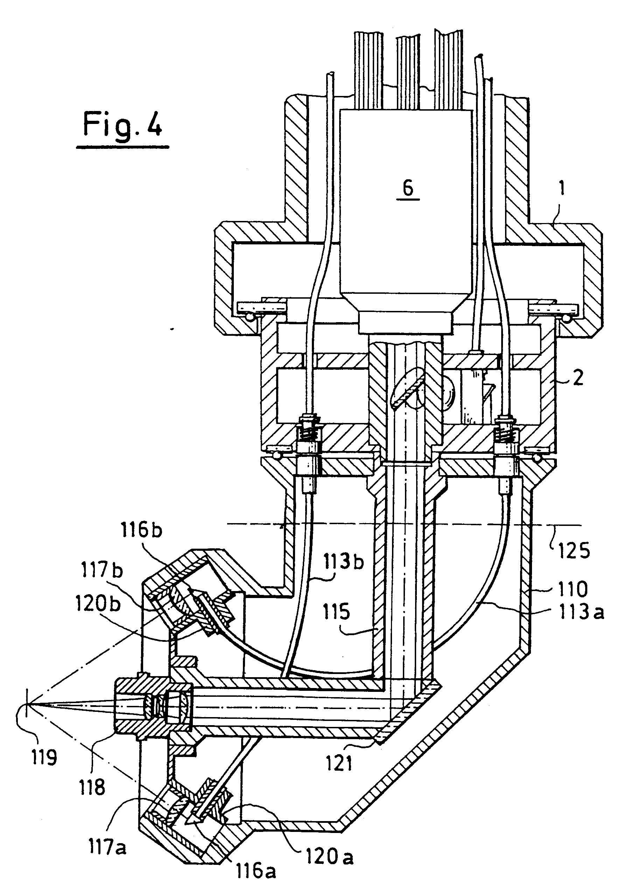

Die Blickrichtung der in Figur 1 dargestellten Frontoptik an dem in Figur 9 dargestellten Koordinatenmeßgerät ist senkrecht nach unten auf die Oberfläche des Meßtisches zu gerichtet. Um Meßaufgaben bewältigen zu können, bei denen die Oberfläche des Werkstücks andere Blickrichtungen erfordert, sind mehrere Frontoptiken vorgesehen, bei denen das Objektiv unter verschiedenen Winkeln bezogen auf die Ausrichtung des Dreipunktlagers (8a) an der Unterseite des Zwischenstücks (2) senkrecht zur optischen Achse der Videokamera (6) abgewinkelt ist. Eine solche Frontoptik ist in Figur 4 dargestellt. Hier dient ein Umlenkspiegel (121) im Strahlengang zwischen dem Objektiv (118) und der Videokamera (6) zur Umlenkung des Beobachtungsstrahlenganges. Die übrigen Bauelemente sind genauso oder ähnlich ausgeführt wie in der Frontoptik in Figur 1. Durch Ausnutzen der 90°-Symmetrie, mit der die Endflächen der Lichtleiter an der Trennstelle aufeinanderliegen, kann ein und dieselbe Frontoptik (110) in vier verschiedenen Richtungen nämlich in die Richtungen X, -X, Y und -Y arbeiten, wenn zusätzliche Zylinder für das Dreipunktlager an der Unterseite des Zwischenstücks (2) in 30°-Abständen vorgesehen sind.

Verwendet man statt der halbstarren Lichtleiterstäbe (113a-d) im Gehäuse (110) der Frontoptik flexible Lichtleiter und nimmt die entstehenden Zwickelverluste in Kauf, lassen sich unterschiedliche Blickrichtungen dadurch realisieren, daß beispielsweise an der durch die Strichlinie (125) bezeichneten Stelle ein Drehlager eingesetzt wird, um das der untere Teil der Frontoptik (110) in einem begrenzten Winkelbereich drehbar ist.

Ein kontinuierliches Drehen ohne Begrenzung des Drehwinkels ist dann möglich, wenn die Wechselstelle wie in Figur 8 skizziert ausgebildet ist. Hier besteht die Oberseite des Gehäuses der Frontoptik aus zwei gegeneinander verdrehbaren Teilen. Der äußere Ring (310) trägt das mit (312a-c) bezeichnete Dreipunktlager. Am inneren Ring (311) ist die Frontoptik insgesamt befestigt. Das Drehlager ist durch die Doppellinie (314) angedeutet.

Im inneren Ring (311) sind die aufgespleisten Enden eines faseroptischen Lichtleiters (313) kreisförmig angeordnet und stehen mit ihren Stirnflächen den entsprechenden Enden eines oder mehrere Vesorgungslichtleiter gegenüber, die ebenfalls kreisförmig angeordnet sind. Auf diese Weise entsteht ein optischer Schleifring, der die Übertragung des Lichts von den Versorgungslichtleitern in die Frontoptik in jeder Winkelstellung sicherstellt. Auch hier können einzelne Segmente des aus den Lichtleiterstirnflächen gebildeten Kreises versorgungsseitig und/oder auf der Seite der Frontoptik getrennt schaltbar bzw. getrennt verlegt sein, um Vorzugsrichtungen der Beleuchtung einstellen zu können.

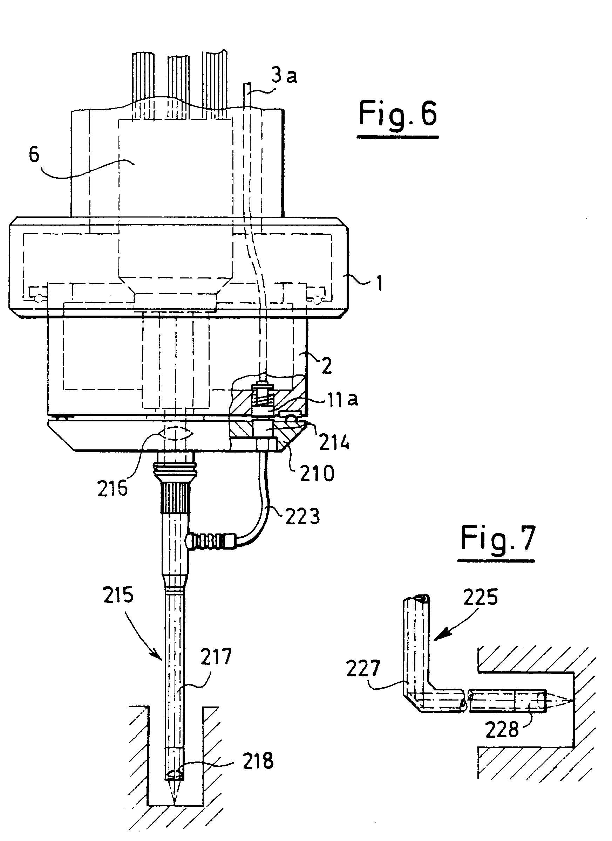

In Figur 6 ist ein weiteres Ausführungsbeispiel der Erfindung dargestellt, welches sich insbesondere zur videotechnischen Vermessung Im Innern von Bohrungen oder anderen engen Werkstücköffnungen eignet. Hierzu ist an das Zwischenstück (2) aus Figur 1 statt der dort gezeigten Frontoptik (10) eine Frontoptik (215) in Form eines Endoskopes bzw. Technoskopes angesetzt. Das Technoskop (215) ist zentrisch an einer Halteplatte (210) befestigt, die an ihrer Oberseite wie die Frontoptik (10) aus Figur 1 ein Dreipunktlager bestehend aus drei Kugelpaaren trägt. In dem Tubusrohr in der Platte (210), welches das Endoskop (215) mit dem inneren Tubusrohr im Zwischenstück (2) verbindet, ist eine Hilfsoptik (216) untergebracht, die für eine Abbildung des vom Objektiv (218) am distalen Ende des Endoskops entworfenen Bildes auf die photoempfindliche Fläche der Fernsehkamera (6) sorgt. Der Lichtleiteranschluß (223) des Endoskops (215) ist auf eine Hülse (214) auf der Oberseite der Platte (210) gelegt. Diese Hülse (214) wirkt in gleicher Weise wie die Hülse (14a) in Figur 1 mit der Zentrierhülse (11a) im Zwischenstück (2) zusammen und koppelt den Lichtleiter (223) verlustarm an den Versorgungslichtleiter (3a) an. Damit auch Bohrungen mit unterschiedlichen Achsrichtungen ausgemessen werden können, sind jeweils an entsprechenden anderen Platten (210) weitere Endoskope vorgesehen, die anstelle des geraden Schafts (217) einen abgewinkelten Schaft besitzen. Ein solcher Schaft (227) ist in der Figur 7 beispielhaft dargestellt. Für eine bestimmte Meßaufgabe werden dann die benötigte Anzahl von Halteplatten (210) mit mehreren entsprechend den zu untersuchenden Bohrungen abgewinkelten Endoskopen bereitgehalten und können in ähnlicher Weise wie mechanische Taststifte auch automatisch an den am Meßarm des Koordinatenmeßgerätes verbleibenden Teil des Tastkopfes eingewechselt werden. Da die Objektive von Endoskopen bzw. Technoskopen oft am distalen Ende auswechselbar sind, ist hier noch zusätzlich ein Austausch gegen Objektive mit anderer Brennweite bzw. anderer Blickrichtung möglich.

**Patentansprüche**

1. Koordinatenmeßgerät mit einem am Meßarm (1) des Koordinatenmeßgerätes befestigten optischen Tastkopf, der eine durch Lichtleiter (9a-e) versorgte Beleuchtungseinrichtung besitzt, wobei der Tastkopf mit einer auswechselbaren Frontoptik (10) versehen ist, die Frontoptik ein Objektiv (18) und eine an das Objektiv angepaßte Beleuchtungsoptik (17) enthält, die unter dem für eine Dunkelfeldbeleuchtung erforderlichen Winkel zur optischen Achse des Objektivs strahlt, und wobei außerdem die Lichtleiter (9a-d, 13a-d) über die Wechselfläche geführt sind, mittels der die Frontoptik reproduzierbar am Tastkopf gehalten ist, und daß eine Einrichtung (11/14) zur verlustarmen Kopplung der Lichtleiterenden an der Wechselfläche vorgesehen ist.

2. Koordinatenmeßgerät nach Anspruch 1, dadurch gekennzeichnet, daß die Lichtquelle (41), von der die Lichtleiter (9a-d) gespeist werden, an dem vom Tastkopf abgewandten Ende des Meßarmes (1) thermisch isoliert befestigt ist.

3. Koordinatenmeßgerät nach Anspruch 1, dadurch gekennzeichnet, daß mehrere gegeneinander auswechselbare Frontoptiken (10;110;215;225) vorgesehen sind, die Objektive (18;118;218;228) mit unterschiedlichem Arbeitsabstand, unterschiedlichem Durchmesser oder unterschiedlicher Blickrichtung besitzen.

4. Koordinatenmeßgerät nach Anspruch 1, dadurch gekennzeichnet, daß für die Frontoptik (10) eine kontinuierlich oder in festen Schritten drehbare Halterung vorgesehen ist.

5. Koordinatenmeßgerät nach Anspruch 1, dadurch gekennzeichnet, daß der Tastkopf über eine nachgiebige Knickstelle im Meßarm (1) des Koordinatenmeßgerätes gelagert ist.

6. Koordinatenmeßgerät nach Anspruch 1, dadurch gekennzeichnet, daß die Beleuchtungsoptik mehrere um das Objektiv (18) der Frontoptik (10) herum angeordnete Kollimatoren (17a-d) enthält, die unter dem für eine Dunkelfeldbeleuchtung erforderlichen Winkel zur optischen Achse des Objektivs strahlen.

7. Koordinatenmeßgerät nach Anspruch 6, dadurch gekennzeichnet, daß jeder Kollimator (17a-d) von einem eigenen Lichtleiter (9a-d) versorgt ist und die Lichtleiter einzeln schaltbar sind.

8. Koordinatenmeßgerät nach Anspruch 7, dadurch gekennzeichnet, daß die Enden der Lichtleiter (9a-d) an der Wechselfläche in Zentrierhülsen (11a-d) aufgenommen sind.

9. Koordinatenmeßgerät nach Anspruch 7, dadurch gekennzeichnet, daß die in der wechselbaren Frontoptik (10) enthaltenen Lichtleiter (13a-d) Lichtleitstäbe sind.

10. Koordinatenmeßgerät nach Anspruch 1, dadurch gekennzeichnet, daß die Stirnseiten (313) der Lichtleiter an der Wechselfläche ringförmig angeordnet sich direkt gegenüberstehen.

**Claims**

1. A coordinate measuring apparatus comprising, an optical sensing head attached to a measuring arm (1) of said coordinate measuring apparatus, which sensing head includes an illumination optic means supplied by light conductors (9a-e) and has a detachable front optic unit (10) which comprises an objective lens (18) and an illumination optic part (17) emitting light at an angle to the optical axis of said objective lens as required to provide a dark-field illumination, said light conductors (9a-d, 13a-d) being interconnected at a change interface by means for providing a low-loss coupling of the ends of the light conductors at said change interface, which change interface assures that said detachable front optic unit can be reproducibly reattached to said sensing head.

2. The coordinate measuring apparatus of claim 1, wherein the light source (41) for supplying the illuminating light to the light conductors (9a-d) is mounted on the end of said measuring arm (1) opposite to said sensing head and is thermally insulated therefrom.

3. The coordinate measuring apparatus of claim 1, comprising a plurality of exchangeable front optic units (10; 110; 215; 225) having objective lenses (18; 118; 218; 228) with different work distances, different diameters or different viewing directions, respectively.

4. The coordinate measuring apparatus of claim 1, comprising a holder for permitting a continuous or stepwise rotation of said front optic unit (10).

5. The coordinate measuring apparatus of claim 1, said sensing head being held to said measuring arm (1) via a yieldable kink joint.

6. The coordinate measuring apparatus of claim 1, comprising a plurality of collimators (17a-d) arranged in said front optic unit (10) so as to surround said objective (18) and being adjusted so as to emit light at an angle to the optical axis of said objective lens required to provide a dark-field illumination.

7. The coordinate measuring apparatus of claim 6, said collimators (17a-d) being supplied by respective ones of said light conductors (9a-d) and each single light conductor being switchable.

8. The coordinate measuring apparatus of claim 7, wherein the end portion of said light conductors (9a-d) terminating at said change interface are held in centering sleeves.

9. The coordinate measuring apparatus of claim 7, said light conductors (13a-d) in said detachable front optic means (10) being respective light conducting rods.

10. The coordinate measuring appraratus of claim 1, wherein the respective end faces (313) of said light conductors define two rings facing each other at said change interface.

**Revendications**

1. Appareil pour mesurer des coordonnées, comprenant une tête de palpage optique fixée sur le bras de mesure (1) de celui-ci et équipée d'un dispositif d'éclairage alimenté par des guides d'ondes optiques (9a-e), dans lequel la tête de palpage est munie d'une optique frontale interchangeable, cette optique frontale contenant un objectif (18) et une optique d'éclairage, adaptée à l'objectif, qui rayonne par rapport à l'axe optique de l'objectif suivant l'angle nécessaire à un éclairage sur fond obscur, et dans lequel en outre les guides d'ondes optiques (9a-d ; 13a-d) sont guidés par l'intermédiaire de la surface d'interchangeabilité grâce à laquelle l'optique frontale est fixée de façon reproductible à la tête de palpage, appareil comportant également un dispositif (11/14) permettant un couplage, avec peu de pertes, des extrémités des guides d'ondes optiques au niveau de la surface d'interchangeabilité.

2. Appareil pour mesurer des coordonnées selon la revendication 1, caractérisé en ce que la source de lumière (41) qui alimente les guides d'ondes optiques (9a-d), est fixée de façon à être thermiquement isolée à l'extrémité du bras de mesure opposée à la tête de palpage.

3. Appareil pour mesurer des coordonnées selon la revendication 1, caractérisé en ce que plusieurs optiques frontales mutuellement interchangeables (10, 110, 215, 225) sont prévues, possédant des objectifs (18, 118, 218, 228) avec différentes distances de travail, différents diamètres ou différentes directions de visée.

4. Appareil pour mesurer des coordonnées selon la revendication 1, caractérisé en ce qu'un support tournant de façon continue ou par pas déterminés est prévu pour l'optique frontale (10).

5. Appareil pour mesurer des coordonnées selon la revendication 1, caractérisé en ce que la tête de palpage est montée sur le bras de mesure (1) de l'appareil par l'intermédiaire d'un joint articulé flexible.

6. Appareil pour mesurer des coordonnées selon la revendication 1, caractérisé en ce que l'optique d'éclairage contient plusieurs collimateurs (17a-d) disposés autour de l'objectif (18) de l'optique frontale (10), qui rayonnent par rapport à l'axe optique de l'objectif suivant l'angle nécessaire à un éclairage sur fond obscur.

7. Appareil pour mesurer des coordonnées selon la revendication 6, caractérisé en ce que chaque collimateur (17a-d) est alimenté par son propre guide d'ondes optiques et en ce que ces guides d'ondes optiques sont commutables séparément.

8. Appareil pour mesurer des coordonnées selon la revendication 7, caractérisé en ce que les extrémités des guides d'ondes optiques (9a-d) sont reçues au niveau de la surface d'interchangeabilité dans des douilles de centrages (11a-d).

9. Appareil pour mesurer des coordonnées selon la revendication 7, caractérisé en ce que les guides d'ondes optiques (13a-d) contenus dans l'optique frontale interchangeable sont des barreaux guides de lumière.

10. Appareil pour mesurer des coordonnées selon la revendication 1, caractérisé en ce que les faces frontales (313) des guides d'ondes optiques sur la surface d'interchangeabilité sont en forme d'anneau et se font face directement.

Fig.1

## Fig. 2

## Fig.3

# Fig.4

Fig.5a

Fig.5b

Fig.5c

Fig.8

Fig.6

3 a

6

1

2

11 a

214

210

216

223

Fig.7

225

227

215

217

228

218

# Fig.9